Europäisches Patentamt

European Patent Office

Office européen des brevets

(11) Publication number: **0 082 204**
**B1**

# EUROPEAN PATENT SPECIFICATION

(45) Date of publication of patent specification: **21.08.85**

(51) Int. Cl.⁴: **G 02 B 1/04**

(21) Application number: **82901542.9**

(22) Date of filing: **26.05.82**

(86) International application number:
**PCT/JP82/00194**

(87) International publication number:
**WO 83/00066 06.01.83 Gazette 83/01**

(54) **PLASTIC LENS WITH HIGH REFRACTIVE INDEX.**

(30) Priority: **24.06.81 JP 97656/81**

(43) Date of publication of application:
**29.06.83 Bulletin 83/26**

(45) Publication of the grant of the patent:
**21.08.85 Bulletin 85/34**

(84) Designated Contracting States:
**FR**

(56) References cited:
**JP-A-53 007 787**
**JP-A-55 015 118**

(73) Proprietor: **HOYA LENS CORPORATION**
**25, Kowada Itsukaichi-machi Nishitama-gun**
**Tokyo 190-01 (JP)**

(72) Inventor: **TARUMI, Niro**
**280-27-302, Haijima-cho**
**Akishima-shi, Tokyo 196 (JP)**
Inventor: **KOMIYA, Sigeo**
**309-8, Miyazawa-cho**
**Akishima-shi, Tokyo 196 (JP)**
Inventor: **SUGIMURA, Mitsuo**
**476-4, Kumakawa, Fussa-shi**
**Tokyo 197 (JP)**

(74) Representative: **Portal, Gérard et al**
**Cabinet Z. Weinstein 20, Avenue de Friedland**
**F-75008 Paris (FR)**

EP 0 082 204 B1

Courier Press, Leamington Spa, England.

## Description

### Technical field

This invention relates to a plastic lens with a high refractive index, and more particularly to a plastic spectacle lens whose refractive index ($n_D$) is at least 1.54.

### Background art

There have been plastic lenses produced by the cast polymerization of a monomer such as diethyleneglycolbisallylcarbonate (hereinafter referred to CR-39) or methylmethacrylate. These plastic lenses are superior in terms of the lightness, safety and dyeability, but are inferior in terms of the refractive index, to ordinary lenses of inorganic glass such as crown glass; the refractive index of the former is about 1.50, and the latter is about 1.523, so that the plastic lenses must be thicker than the inorganic glass lenses in the center and edge thereof. Therefore, developing a plastic lens with a high refractive index has been desired.

There has been known heretofore a method for increasing refractive index in which a comonomer for increasing the refractive index is copolymerized with a monomer such as CR-39. But, such a comonomer must be the one capable of yielding the copolymer having not only a high refractive index, but also excellent physical and chemical properties, and good workability. But, such comonomer has not been discovered yet. For instance the copolymer of CR-39 and diallylisophthalate disclosed in Japanese Patent Disclosure No. 7787/1978, or a copolymer of CR-39 and benzylmethacrylate disclosed in Japanese Patent Disclosure No. 41965/1979 is known as a copolymer for plastic spectacle lens. However, both copolymers are not endowed with all the good properties. The former copolymer can have a refractive index in the range of from 1.50 to 1.57, but increasing the refractive index causes decrease of the workability, and increasing the content of diallylisophthalate causes a considerable decrease of the superficial hardness, impact resistance, and dyeability. The latter copolymer can also have a refractive index in the range of from 1.50 to 1.57, but has a superficial hardness extremely lower than that of Cr-39 homopolymer and has a surface on which glass coating by vacuum evaporation can not be conducted. Using an increased amount of benzylmethacrylate causes blur on the copolymer which is unfavorable for spectacle lenses. The official gazette of Japanese Patent Disclosure No. 41965/1979 discloses that the addition of a cross-linking agent in an amount up to 20 wt.% to the system of CR-39-benzylmethacrylate enables the resulting polymer to improve the scratch resistance. However, while the addition surely improves scratch resistance, it simultaneously tends to give some blur or striae to the lens thereof even in the amoumt which is not sufficient to give a high refractive index.

A plastic lens having a high refractive index prepared from the terpolymer comprising diethylene-glycolbisallylcarbonate, benzylmethacrylate and diallylisophthalate is revealed in Japanese patent No. 8015118. This patent discloses a plastic lens prepared from the above terpolymer, the proportionate amounts of the compounds disclosed in this prior art document being as follows: diethylene-glycolbisallylcarbonate 65%, benzylmethacrylate 20% and diallylisophthalate 15% by weight.

However, such a terpolymer cannot give a plastic lens having both a refractive index higher than 1.54, no blur and no striae and excellent physical and chemical properties which are suitable for spectacle lenses.

The object of this invention is to provide a plastic lens having a refractive index of at least 1.54 and excellent physical and chemical properties and no blur and striae, prepared from specific composition of the above terpolymer.

### Disclosure of invention

This invention relates to a higher refractive plastic lens comprised of a cross-linked terpolymer comprising CR-39, benzylmethacrylate, and diallylisophthalate, and having a refractive index of at least 1.54, characterized in that diethylene-glycolbisallylcarbonate is in an amount ranging from 5 to 40% by weight, benzylmethacrylate is in an amount ranging from 5 to 40% by weight and diallylisophthalate is in an amount ranging 90 to 20% by weight.

### Best mode of carrying out the invention

In the invention, using CR-39 in an amount of 40% by weight enables the terpolymer to improve the physical and chemical properties such as scratch resistance, impact resistance, solvent resistance, weatherability, etc., but is liable to give the lens of the terpolymer a refractive index of below 1.54, blur and striae, which are unfavorable for spectacle lens. Using CR-39 in an amount of below 5 wt.% is liable to give the terpolymer bad physical and chemical properties, and bad workability, which are unfavorable in the practical use. Using benzylmethacrylate in an amount of above 40 wt.% is liable to give the terpolymer blur and striae and very bad workability. Using diallylisophthalate in an amount of above 90 wt.% is liable to give the terpolymer bad physical and chemical properties and bad workability, which are unfavorable.

The high refractive plastic lens of this invention can be produced by a method comprising pouring a mixed solution consisting of CR-39, benzylmethacrylate, diallylisophthalate, and a polymerization initiator into a mold made of two plates of glass mold and a plastic gasket, and heating or irradiating with ultraviolet ray the one to cure it.

The high refractive plastic lens of this invention differs from prior plastic lenses having only a higher refractive index in terms of having no blur and no striae, better workability, better optical, chemical and physical properties, so that they are preferable as spectacle lens.

This invention will be more clearly understood with reference to the following examples, in which parts are weight parts.

Example 1

A mixed solution consisting of 30 parts of CR-39, 10 parts of benzylmethacrylate, 60 parts of diallylisophthalate, and 3 parts of diisopropyl-peroxycarbonate was poured into a mold made of two plates of glass mold and a plastic gasket, and the resulting one was heated to raise gradually the temperature from 40°C to 90°C in 24 hours to make a lens. The lens obtained was taken out of the mold, and then was heated at 120°C for one hour. The lens had 1.549 of refractive index, 90% of transmittance, and no blur and no striae which are unfavorable for spectacle lens, and had the properties such as superficial hardness, dyeability, etc. which are as good as those of homopolymer of CR-39.

Example 2—8, Comparative Example 1—4

The lenses were made in the same manner as in Example 1, except that compositions in table 1 were used.

The result is shown in Table 1.

TABLE 1

| | Composition (parts) | | | | | | |
|---|---|---|---|---|---|---|---|
| | CR-39 | BzMA | DAIP | Refr. Ind. | % Transmittance | blur | striae |
| Ex. 1 | 30 | 10 | 60 | 1.549 | 91 | none | none |
| 2 | 30 | 20 | 50 | 1.549 | 91 | " | " |
| 3 | 30 | 30 | 40 | 1.548 | 91 | " | " |
| 4 | 35 | 15 | 50 | 1.546 | 91 | " | " |
| 5 | 40 | 10 | 50 | 1.542 | 91 | " | " |
| 6 | 20 | 20 | 60 | 1.556 | 90 | " | " |
| 7 | 20 | 30 | 50 | 1.554 | 90 | " | " |
| 8 | 20 | 10 | 70 | 1.557 | 90 | " | " |
| C.Ex.1 | 70 | 0 | 30 | 1.522 | 92 | " | exist |
| 2 | 30 | 0 | 70 | 1.551 | 90 | " | " |
| 3 | 60 | 30 | 10 | 1.524 | 92 | exist | " |
| 4 | 70 | 30 | 0 | 1.521 | 92 | " | " |

Note 1
 BzMA: benzylmethacrylate
 DAIP: diallylisophthalate

Note 2
 Refractive Index: measured by Abbe's refractometer of Atago Co., Ltd.
 % Transmittance: measured with spectrophotometer of Hitachi Co., Ltd.
 Blur: measured with eyes.
 Striae: measured with a strainmeter.

## Claim

A plastic lens having a high refractive index of at least 1.54 prepared from the terpolymer comprising diethylene-glycolbisallylcarbonate, characterized in that it comprises diethylene-glycolbisallylcarbonate in an amount ranging from 5 to 40% by weight, benzylmethacrylate in an amount ranging from 5 to 40% by weight and diallylisophthalate in an amount ranging from 90 to 20% by weight.

## Patentanspruch

Eine plastische Linse mit einem hohen Brechungskoeffizient von wenigstens 1,54, hergestellt aus dem Diethylen-Glycol-bis-Allylkarbonat,

**0 082 204**

Benzylmethacrylat und Diallylisophthalat aufweisenden Terpolymer, dadurch gekennzeichnet, dass sie Diethylen-Glykol-bis-Allylkarbonat in einer Menge von 5 bis 40 Gewichtsprozent, Benzylmethacrylat in einer Menge von 5 bis 40 Gewichtsprozent und Diallylisophthalat in einer Menge von 90 bis 20 Gewichtsprozent aufweist.

**Revendication**

Lentille en plastique ayant un indice de réfraction élevé d'au moins 1,54, préparée à partir du terpolymère comprenant du diéthylène-glycolbisallylcarbonate, du méthacrylate de benzyle et de l'isophtalate de diallyle, caractérisée en ce qu'elle contient du diéthylèle-glycolbisallylcarbonate en une quantité comprise entre 5 et 40% en poids, du méthacrylate de benzyle en une quantité comprise en 5 et 40% en poids et de l'isophtalate de diallyle en une quantité comprise entre 90 et 20% en poids.